# EUROPÄISCHE PATENTANMELDUNG

(11) **EP 4 748 983 A2**
(43) Veröffentlichungstag der Anmeldung: **27.05.2026**
(21) Anmeldenummer: 25217197.0
(22) Anmeldetag: 20.11.2025
(51) Int. Cl.: D01D 5/02, D01D 5/098, D01D 7/00

(54) **VERFAHREN ZUM SCHMELZSPINNEN VON POLYMERPROBEN, SCHMELZSPINNVORRICHTUNG FÜR POLYMERPROBEN SOWIE VERWENDUNG EINER SCHMELZSPINNVORRICHTUNG ZUR DURCHFÜHRUNG EINES VERFAHRENS ZUM SCHMELZSPINNEN VON POLYMERPROBEN**

(30) Priorität: 26.11.2024 DE 102024134789
(71) Anmelder: TEXTECHNO HERBERT STEIN GMBH & CO. KG, 41066 Mönchengladbach (DE)
(72) Erfinder: BÖNNEN, Thomas, 41066 Mönchengladbach (DE); FLIESCHER, Stefan, 41066 Mönchengladbach (DE); MÖRSCHEL, Ulrich, 41066 Mönchengladbach (DE)
(74) Vertreter: dompatent

(57) **Zusammenfassung**

Verfahren zum Schmelzspinnen von Polymerproben, aufweisend die folgenden Verfahrensschritte: Aufschmelzen zumindest eines Mengenanteils der Polymerprobe, Extrudieren und Anbinden einer ersten Teilmenge der aufgeschmolzenen Polymerprobe mittels einer Düseneinrichtung auf einen Ablagekörper, Beabstanden des Ablagekörpers von der Düseneinrichtung zur Ausbildung mindestens eines Fadens zwischen der Düseneinrichtung und dem Ablagekörper, und Extrudieren einer zweiten Teilmenge der aufgeschmolzenen Polymerprobe über die Düseneinrichtung unter gleichzeitigem Rotieren des Ablagekörpers um eine Rotationsachse zum Verstrecken und Ablegen des mindestens einen Fadens auf dem Ablagekörper.

## Beschreibung

Die vorliegende Erfindung betrifft ein Verfahren zum Schmelzspinnen von Polymerproben sowie eine Schmelzspinnvorrichtung für Polymerproben als auch weiterhin die Verwendung einer Schmelzspinnvorrichtung zur Durchführung eines Verfahrens zum Schmelzspinnen von Polymerproben.

Aus dem Stand der Technik sind bereits hinlänglich sowohl Verfahren als auch Vorrichtungen zum Schmelzspinnen von thermoplastischen Polymeren bekannt geworden. Die aus dem Stand der Technik bekannten Verfahren bzw. Vorrichtungen dienen dabei dazu, ein thermoplastisches Ausgangsmaterial durch Aufheizen und Extrudieren über eine Düseneinrichtung und Abziehen von der Düseneinrichtung beispielsweise über eine Galette als mindestens ein Faden, insbesondere als Monofilfaden oder Multifilamentfaden, zu verspinnen. In dem Stand der Technik ist es dabei erforderlich, dass die mittels der Verfahren und Vorrichtungen zu verspinnenden thermoplastischen Polymere eine ausreichende Menge aufweisen, um diese über die Verfahren und Vorrichtungen des Standes der Technik verspinnen zu können. Vielmals handelt es sich bei den aus dem Stand der Technik bekannten Vorrichtungen um Schmelzspinnvorrichtungen, welchen kontinuierlich eine ausreichende Menge an thermoplastischen Polymeren zugeführt werden muss, um einen stabilen Schmelzspinnvorgang zu gewährleisten.

Dabei ist es im Stand der Technik nachteilig, dass die über die Düseneinrichtung auszugebenden bzw. extrudierten Fäden des aufgeschmolzenen thermoplastischen Polymers zunächst aufwändig beispielsweise händisch abgezogen und auf Galetten oder sonstige Abzugseinrichtungen aufgelegt werden müssen. Eine Unterbrechung des kontinuierlichen Schmelzspinnvorgangs ist damit sehr aufwändig. Weiterhin erfordern die vorbezeichneten Verfahren und Vorrichtungen die Zuführung einer hohen Menge eines thermoplastischen Ausgangsmaterials, bis sich erst ein stabiler Schmelzspinnprozess eingestellt hat. Im Stand der Technik ist es bisher nicht möglich, geringe Mengen eines neu hergestellten Polymers auf deren Verspinnbarkeit, d.h. ihre Eigenschaften bei einem Schmelzspinnvorgang und die resultierenden Fasereigenschaften, hin zu untersuchen.

Ausgehend von den vorbezeichneten Nachteilen des Standes der Technik liegt es der vorliegenden Erfindung zugrunde, ein Verfahren zum Schmelzspinnen von Polymerproben als auch eine Vorrichtung zum Schmelzspinnen von Polymerproben bereitzustellen, worüber sowohl kleinste thermoplastische Probenmengen, als auch größere Probenmengen jeweils einem stabilen Schmelzspinnvorgang unterzogen werden können und die erzielten Eigenschaften des mindestens einen gesponnenen Fadens untersucht und validiert werden können.

Gemäß einem ersten Aspekt wird die Aufgabe gelöst durch ein Verfahren zum Schmelzspinnen einer Polymerprobe, welches die folgende Verfahrensschritte aufweist:
1a) Aufschmelzen zumindest eines Mengenanteils der Polymerprobe,
1b) Extrudieren und Anbinden einer ersten Teilmenge der aufgeschmolzenen Polymerprobe mittels einer Düseneinrichtung auf einen Ablagekörper,
1c) Beabstanden des Ablagekörpers von der Düseneinrichtung zur Ausbildung mindestens eines Fadens zwischen der Düseneinrichtung und dem Ablagekörper, und
1d) Extrudieren einer zweiten Teilmenge der aufgeschmolzenen Polymerprobe über die Düseneinrichtung unter gleichzeitigem Rotieren des Ablagekörpers um eine Rotationsachse zum Verstrecken und Ablegen des mindestens einen Fadens auf dem Ablagekörper.

Alternativ kann das erfindungsgemäße Verfahren zum Schmelzspinnen einer Polymerprobe die folgenden Verfahrensschritte aufweisen:
2a) Aufschmelzen zumindest eines Mengenanteils der Polymerprobe,
2b) Extrudieren einer ersten Teilmenge der aufgeschmolzenen Polymerprobe mittels einer Düseneinrichtung, Abziehen der ersten Teilmenge der aufgeschmolzenen Polymerprobe mittels eines Luftstroms zur Ausbildung mindestens eines Fadens und Ansaugen des mindestens einen Fadens auf einen Ablagekörper mittels einer Saugeinrichtung,
2c) bevorzugt Beabstanden des Ablagekörpers von der Düseneinrichtung, sowie
2d) Extrudieren einer zweiten Teilmenge der aufgeschmolzenen Polymerprobe über die Düseneinrichtung unter gleichzeitigem Rotieren des Ablagekörpers um eine Rotationsachse zum Verstrecken und Ablegen des mindestens eines Fadens auf dem Ablagekörper.

Im Rahmen der vorliegenden Erfindung soll der Begriff des mindestens eines Fadens dahingehend verstanden werden, dass aus der Düseneinrichtung erfindungsgemäß ein Monofilfaden, oder gleichzeitig mehrere Monofilfäden oder ein Multifilamentfaden, extrudiert und abgezogen werden kann.

Erfindungsgemäß kann bevorzugt ein zylindrischer Ablagekörper gewählt werden, der im Schritt 1d) oder 2d) um eine Zylinderlängsachse des zylindrische Ablagekörpers rotiert wird. Erfindungsgemäß können jedoch auch von der zylindrischen Form abweichende Ablagekörper genutzt werden, wie beispielsweise mit einer ovalisierten, einer polygonen oder einer teilkonkaven Querschnittsform.

Die Düseneinrichtung kann erfindungsgemäß im Verfahrensschritt 1b) in geringem Abstand zu dem Ablagekörper angeordnet werden, wobei die erste Teilmenge der Polymerprobe im aufgeschmolzenen Zustand unmittelbar auf den Ablagekörper extrudiert wird. Anders ausgedrückt wird die erste Teilmenge des ausgeschmolzenen Polymers über die Düseneinrichtung unmittelbar auf den Ablagekörper aufgedruckt bzw. angedruckt, so wie dies aus dem Bereich der FDM 3D-Drucker bekannt ist. Hierdurch wird erfindungsgemäß der Effekt erzielt, dass die erste Teilmenge der Polymerprobe dazu genutzt wird, zunächst das extrudierte Material auf dem Ablagekörper aufzudrucken und damit eine Anbindung der Probe an den Ablagekörper herzustellen.

Die Düseneinrichtung umfasst erfindungsgemäß zumindest eine Düse zum Ausgeben des geschmolzenen Polymers, wobei die Düse eine Extrusionsachse aufweist, entlang derer das aufgeschmolzene Polymer extrudiert bzw. ausgegeben wird.

Die Düseneinrichtung kann erfindungsgemäß lediglich eine einzige singuläre Düsenöffnung aufweisen, über welche das verflüssigte Polymer extrudiert bzw. ausgegeben wird und worüber dann im Verfahrensschritt 1d) oder 2d) ein einziger Monofilfaden aus dem aufgeschmolzenen Polymermaterial gebildet und über die Düseneinrichtung ausgegeben wird. Erfindungsgemäß kann die Düseneinrichtung alternativ jedoch auch eine Mehrzahl an Düsenöffnungen zur gleichzeitigen Ausbildung von mehreren Monofilfäden bzw. zur Ausbildung eines Multi-Filament-Fadens umfassen.

Erfindungsgemäß kann es jedoch auch vorgesehen werden, die Düseneinrichtung bereits im Verfahrensschritt 2b) beabstandet zu dem Ablagekörper anzuordnen, die erste Teilmenge über die Düseneinrichtung zu extrudieren und die über die Düseneinrichtung extrudierte erste Teilmenge mittels Ansaugen an den Ablagekörper anzubinden. Das Ansaugen kann dabei beispielsweise durch Vorsehung von Ansaugöffnungen innerhalb des Ablagekörpers erfolgen, wobei die Ansaugöffnungen mit einer Vorrichtung zur Erzeugung eines Unterdrucks verbunden sind zur Erzeugung eines Saugluftstroms über die Ansaugöffnungen.

Es kann vorgesehen werden, dass das erfindungsgemäße Verfahren an einer Polymerprobe mit einer definierten Gesamtprobenmenge durchgeführt wird, wobei sich die Gesamtprobenmenge aus einer ersten und zweiten Teilmenge zusammensetzt.

Bei dem Ablagekörper kann es sich beispielsweise erfindungsgemäß um einen Ablagekörper mit einer kreiszylindrischen Ablageoberfläche handeln, der Ablagekörper kann besonders bevorzugt als Hohlkörper mit kreiszylindrischer Mantelfläche ausgebildet werden.

Zum Abziehen des mindestens einen Fadens, insbesondere des mindestens einen Monofil- bzw. Multi-Filament-Fadens, von der Düseneinrichtung kann ein Luftstrom parallel zu der Extrusionsachse in der Düseneinrichtung und in Extrusionsrichtung vorgesehen werden.

Bevorzugt kann es erfindungsgemäß vorgesehen werden, den Luftstrom auf eine definierte Temperatur aufzuheizen oder abzukühlen, um den abzuziehenden Monofil- bzw. Multi-Filament-Faden mit einer definierten Temperatur zu beaufschlagen, um beispielsweise sein vorzeitiges Abkühlen zu verhindern oder ihn auf eine definierte gewünschte Temperatur aufzuheizen, welche bevorzugt oberhalb der Umgebungstemperatur liegt. Im Verfahrensschritt 1d) oder 2d) kann der mindestens eine Faden im Bereich zwischen der Düseneinrichtung über eine Wärmestrahlungsquelle erwärmt werden.

Auch kann der Ablagekörper mittels einer Heizeinrichtung auf eine vordefinierte Temperatur aufgeheizt und gehalten wird. Erfindungsgemäß kann es vorgesehen werden, dass während oder nach dem Ablegen des mindestens einen Fadens auf dem Ablagekörper der Ablagekörper auf eine Temperatur oberhalb der Glasübergangstemperatur, besonders bevorzugt im Bereich der Schmelztemperatur, aufgeheizt wird zum Konsolidieren des auf dem Ablagekörper bevorzugt in Form eines Ablagemusters abgelegten mindestens einen Fadens, insbesondere des mindestens einen Monofilfadens bzw. Multifilamentfadens, zur Ausbildung eines Wickelkörpers.

Selbstverständlich kann alternativ auch vorgesehen werden, einen Kühlluftstrom vorzusehen, um den extrudierten mindestens einen Faden abzukühlen.

Erfindungsgemäß kann es vorgesehen werden, dass im Verfahrensschritt 1b) oder 2b) während des Aufbringens der ersten Teilmenge der aufgeschmolzenen Polymerprobe der Ablagekörper um die Zylinderachse rotiert und/oder entlang der Rotationsachse translatorisch bewegt wird.

Bevorzugt kann während des Vorgangs des Anbindens der erste Teilkörper der Polymerprobe an dem Ablagekörper der Ablagekörper eine halbe oder weniger als eine halbe Umdrehung um die Rotationsachse gedreht werden.

Besonders bevorzugt kann es vorgesehen werden, dass der Ablagekörper während des Verfahrensschritts 1b) oder 2b) derart angeordnet wird, dass sich die Düseneinrichtung in einem ersten Teilbereich entlang der Zylinderachse befindet, derart, dass die Anbindung der Polymerprobe in dem ersten Teilbereich des Ablagekörpers erfolgt und nachfolgend des Schritts 1b) oder 2b) der Ablagekörper entlang der Zylinderlängsachse translatorisch verschoben wird, so dass die Düseneinrichtung in einem zweiten Teilbereich entlang der Zylinderachse angeordnet ist, wobei die Ablage des mindestens einen Fadens in dem zweiten Bereich des Ablagekörpers erfolgt.

Weiterhin kann vorgesehen werden, dass im Verfahrensschritt 1d) oder 2d) der Ablagekörper um die Rotationsachse mit einer resultierenden Geschwindigkeit der Ablageoberfläche des Ablagekörpers im Bereich von 100 m/Minute bis 5000 m/Minute rotiert wird.

Bevorzugt wird erfindungsgemäß der mindestens eine Faden nach Erreichen der gewünschten Oberflächengeschwindigkeit des Ablagekörpers lediglich in einem zweiten Teilbereich des Ablagekörpers abgelegt, dabei kann der Ablagekörper auch relativ zu der Düseneinrichtung translatorisch lediglich im zweiten Teilbereich bewegt werden, um lediglich im zweiten Teilbereich des Ablagekörpers den mindestens einen Monofilfaden in einem Ablagemuster auf den Ablagekörper im zweiten Teilbereich abzulegen.

Weiterhin kann es vorgesehen werden, dass das Verfahren vor dem Verfahrensschritt 1b) zusätzlich den Schritt umfasst:
- Anbringen einer haftungsverbessernden Oberflächenbeschichtung auf zumindest einem Teilbereich des Ablagekörpers, insbesondere Anbringen eines haftverbessernden Klebebandes.

Bevorzugt wird das haftungsverbessernde Klebeband in einem ersten Teilbereich des Ablagekörpers entlang der Längsachse des Ablagekörpers angeordnet bzw. der erste Teilbereich des Ablagekörpers mit einer haftungsverbessernden Oberflächenbeschichtung versehen.

Weiterhin kann das erfindungsgemäße Verfahren vor dem Verfahrensschritt 1b) den weiteren Verfahrensschritt umfassen:
- Anordnung der Extrusionsachse der Düseneinrichtung im Schnittpunkt der horizontalen Tangente an den höchsten Punkt des Ablagekörpers und im geringen Abstand zum höchsten Punkt des Ablagekörpers.

Die Düseneinrichtung wird im Verfahrensschritt 1b) oberhalb des Ablagekörpers und in einem geringen Abstand zu der Oberfläche des Ablagekörpers angeordnet. Weiterhin kann es vorgesehen sein, dass das Verfahren nach dem Verfahrensschritt 1b) den weiteren Verfahrensschritt umfasst:
- Anordnen der Extrusionsachse der Düseneinrichtung im Schnittpunkt der vertikalen Tangente an den Ablagekörper und oberhalb in einem definierten Abstand zum Schnittpunkt der vertikalen Tangente an den zylindrischen Ablagekörper. In den Verfahrensschritten 1c) und 1d) wird der Ablagekörper relativ zu der Düseneinrichtung derart verfahren, dass sich die Düseneinrichtung in einem definierten Abstand oberhalb des Ablagekörpers befindet.

Das erfindungsgemäße Verfahren kann nach dem Verfahrensschritt 1d) zusätzlich den Verfahrensschritt umfassen:
- 1e) Annähern der Düseneinrichtung relativ zu dem Ablagekörper und Andrücken einer dritten Teilmenge der Polymerprobe auf dem Ablagekörper, bevorzugt in einem dritten Teilbereich des Ablagekörpers.

Gemäß einem zweiten Aspekt betrifft die vorliegende Erfindung eine Schmelzspinnvorrichtung für Polymerproben aufweisend:
- eine Heizeinrichtung zum Aufschmelzen zumindest einer Teilmenge einer Polymerprobe;
- eine Extrudereinrichtung zur Förderung der Polymerprobe,
- eine Düseneinrichtung zum Ausgeben des aufgeschmolzenen Polymers in Form mindestens eines Monofilfadens, und
- einen Ablagekörper zur Ablage des mindestens einen Monofilfadens;
wobei der Ablagekörper eine Antriebseinrichtung zum Rotieren des Ablagekörpers um eine Rotationsachse aufweist, wobei die Antriebseinrichtung zum Rotieren des Ablagekörpers mit hohen Geschwindigkeiten zur Orientierung der Molekülketten des extrudierten mindestens einen Monofilfadens ausgebildet ist.

Es kann vorgesehen werden, dass der Ablagekörper in mindestens einem Teilbereich auf der Ablageoberfläche eine haftungsverbessernde Oberflächenbeschichtung aufweist, welche beispielsweise mittels Laserbehandlung, Ätzen oder mittels Glasperlenstrahlen erzeugt wurde. Alternativ kann auch ein haftungsverbesserndes Klebeband in einem Teilbereich des Ablagekörpers aufgebracht werden.

Der Ablagekörper kann insbesondere als Hohlwalze ausgebildet werden, wobei die Oberfläche des Walzenmantels als Ablagefläche ausgebildet ist, wobei besonders bevorzugt eine Mehrzahl von Sauglochbohrungen in der Ablagefläche vorgesehen sind, welche mit einer Unterdruckeinrichtung verbunden sind zur Ansaugung des mindestens einen Monofilfadens an die Ablageoberfläche des Ablagekörpers.

Der Ablagekörper kann weiterhin eine Heizeinrichtung umfassen, um zumindest den Bereich der Ablageoberfläche des Ablagekörpers zu beheizen.

Erfindungsgemäß kann bevorzugt eine induktive Heizeinrichtung vorgesehen werden zum Heizen der Ablageoberfläche des Ablagekörpers. Erfindungsgemäß kann auch eine Heizeinrichtung in Form einer Wärmestrahlungsquelle vorgesehen werden, welche den Bereich der Ablageoberfläche des Ablagekörpers und/oder den Bereich zwischen dem Ablagekörper und der Düseneinrichtung beheizt. Bevorzugt kann als Wärmequelle eine Lichtquelle, wie beispielsweise ein Halogenstrahler, ausgebildet werden. Besonders bevorzugt kann die Heizeinrichtung mindestens eine Infrarotstrahlungsquelle umfassen.

Die Antriebseinrichtung des Ablagekörpers kann weiterhin dazu ausgebildet werden, den Ablagekörper relativ zu der Düseneinrichtung translatorisch zu verfahren und/oder zu verschwenken.

Die Antriebseinrichtung kann dabei derart ausgebildet werden, dass diese den Ablagekörper entlang der Rotationsachse des Ablagekörpers und/oder orthogonal zu der Rotationsachse des Ablagekörpers verfahren kann.

Die Düseneinrichtung kann weiterhin eine Stelleinrichtung umfassen, welche dazu ausgebildet ist, die Düseneinrichtung relativ zu dem Ablagekörper translatorisch zu verfahren und/oder zu verschwenken.

Die Extrudereinrichtung kann weiterhin einen kolbenförmigen Aufnahmeraum für die Polymerprobe und einen angetriebenen Stempel zum Extrudieren von Teilmengen der Polymerprobe umfassen.

Der kolbenförmige Aufnahmeraum kann gegenüber der Umgebung fluidmäßig abgedichtet sein, um die Polymerprobe gegenüber der Umgebung beispielsweise hermetisch abzudichten. Besonders bevorzugt kann es vorgesehen werden, den Aufnahmeraum für die Polymerprobe mit einem Gas zu beaufschlagen, wie beispielsweise einem Inertgas oder insbesondere bevorzugt den Aufnahmeraum zu evakuieren. Die Beaufschlagung mit Inertgas oder die Evakuierung des Aufnahmeraums wird dabei bevorzugt vor dem Aufschmelzen und vor dem Extrudieren der Polymerprobe vollzogen.

Bei der Extrudereinrichtung kann es sich alternativ um eine kontinuierliche Extrusionseinrichtung handeln, welche zur kontinuierlichen Extrusion eines Filamentfadens der Polymerprobe ausgebildet ist, so wie diese Extrusionseinrichtungen beispielsweise aus dem Bereich der FDM 3-Drucker bekannt sind.

Weiterhin kann es vorgesehen werden, dass der zylindrische Ablagekörper über den Umfang auf der Ablagefläche mindestens eine Vertiefung aufweist, wobei jeweilig die mindestens eine Vertiefung parallel zu der Mittelachse des Ablagekörpers verläuft.

Weiterhin kann die Schmelzvorrichtung eine Sensoreinrichtung umfassen, die dazu ausgebildet ist, den in der Polymerschmelze der Polymerprobe herrschenden Druck zu detektieren mit dem Ziel, die Viskosität der Probe zu bestimmen. In einer bevorzugten Ausführungsform wird hierzu die auf den Kolben ausgeübte Kraft gemessen. Alternativ oder zusätzlich kann erfindungsgemäß auch ein Drucksensor im Aufnahmeraum vorgesehen werden, um den auf die Polymerschmelze wirkenden Druck zu messen.

Ein dritter Aspekt der vorliegenden Erfindung betrifft die Verwendung einer Schmelzspinnvorrichtung gemäß dem ersten Aspekt zur Durchführung eines Verfahrens gemäß dem zweiten Aspekt der vorliegenden Erfindung.

Im Nachfolgenden werden unter Bezugnahme auf die beigefügen Figuren schematisch beispielhafte Ausführungsformen einer erfindungsgemäßen Schmelzspinnvorrichtung für Polymerproben sowie beispielhafte Verfahrensschritte des erfindungsgemäßen Verfahrens dargelegt.

Es zeigen:
- Figuren 1A und 1B: eine schematische Ansicht von Anteilen einer ersten beispielhaften Ausführungsform einer erfindungsgemäßen Schmelzspinnvorrichtung während des Extrudierens und Anbindens einer ersten Teilmenge der Polymerprobe an einem Ablagekörper gemäß Verfahrensschritt 1b);
- Figuren 2A und 2B: eine schematische Ansicht von Anteilen einer zweiten beispielhaften Ausführungsform einer erfindungsgemäßen Schmelzspinnvorrichtung während des Extrudierens, Verstreckens und Ablegens einer zweiten Teilmenge der Polymerprobe auf einem Ablagekörper gemäß Verfahrensschritt 1d) oder 2d);
- Figur 3: eine dritte beispielhafte Ausführungsform einer erfindungsgemäßen Schmelzspinnvorrichtung in schematischer Seitenansicht; sowie
- Figur 4: eine vierte beispielhafte Ausführungsform einer erfindungsgemäßen Schmelzspinnvorrichtung in schematischer Frontansicht.

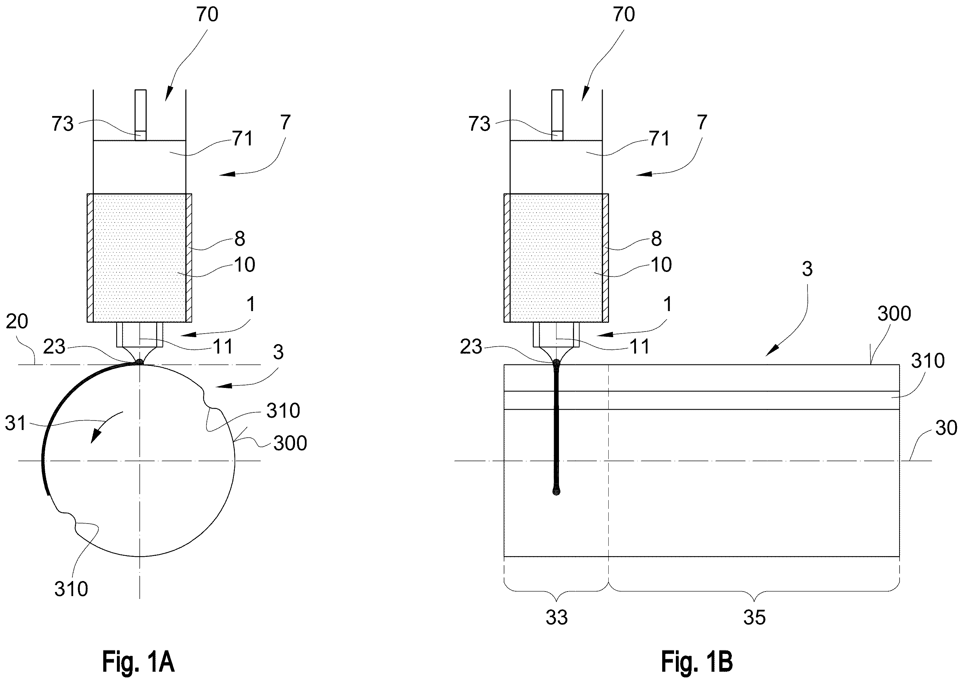

Die Fig. 1A und 1B zeigt eine vereinfachte und schematische Ansicht von Anteilen einer erfindungsgemäßen Schmelzspinnvorrichtung für Polymerproben, welche zunächst eine Heizeinrichtung 8 zum Aufschmelzen zumindest einer Teilmenge einer Polymerprobe 10, eine Extrudereinrichtung 7 zur Förderung der Polymerprobe 10, eine Düseneinrichtung 1 zum Ausgeben des aufgeschmolzenen Polymers 10 in Form mindestens eines Fadens und einen Ablagekörper 3 zur Ablage des mindestens einen Fadens aufweist. In der dargestellten beispielhaften Ausführungsform weist die Extrudereinrichtung 7 einen zylindrischen Aufnahmeraum 70 für die Polymerprobe 10 und einen angetriebenen kolbenförmigen Stempel 71 auf, welcher zum Extrudieren von definierten Mengen der Polymerprobe 10 ausgebildet ist. Der Aufnahmeraum 70 kann dabei dazu ausgebildet werden, evakuiert zu werden oder mit einem Inertgas gespült zu werden. Die dargestellte Heizeinrichtung 8 zur Aufschmelzung der Teilmenge der Polymerprobe 10 ist beispielhaft als Heizmanschette ausgebildet. Weiterhin umfasst die Extrudereinrichtung 7 eine Sensoreinrichtung 73, welche dazu ausgebildet ist, den in der Polymerschmelze der Polymerprobe 10 herrschenden Druck bzw. die auf die Extrudereinrichtung 7 wirkende Kraft zu messen.

Der Ablagekörper 3 ist zum Anbinden einer ersten Teilmenge der aufgeschmolzenen Polymerprobe 10 ausgestaltet. Die Figuren 1A und 1B zeigen die erfindungsgemäße Schmelzspinnvorrichtung während des Schrittes des Extrudierens und Anbindens einer ersten Teilmenge der aufgeschmolzenen Polymerprobe 10 mittels einer Düseneinrichtung 1 auf dem Ablagekörper 3.

Die Fig. 1A zeigt dabei den Ablagekörper 3 und die Düseneinrichtung 1 in Frontansicht auf den zylindrischen Ablagekörper 3, wobei die Fig. 1B wiederum eine Seitenansicht der Düseneinrichtung 1 und des Ablagekörpers 3 während desselben Verfahrenszeitpunkts zeigt. In der dargestellten Ausführungsform wird über die Düseneinrichtung 1 eine erste Teilmenge einer aufgeschmolzenen Polymerprobe 10 auf den Ablagekörper 3 extrudiert. Wie in der Fig. 1A über den gekrümmten Pfeil 31 symbolisiert, wird der Ablagekörper 3 während des Aufbringens der ersten Teilmenge der aufgeschmolzenen Polymerprobe 10 auf dem Ablagekörper 3 um die Rotationsachse 30 rotiert. Weiterhin kann es vorgesehen werden, dass der Ablagekörper 3 in dem gezeigten Verfahrensschritt ebenfalls entlang der Rotationsachse translatorisch bewegt wird. So wie in den Figuren 1A und 1B dargestellt, kann es vorgesehen werden, dass das Anbinden der ersten Teilmenge der aufgeschmolzenen Polymerprobe 10 mittels der Düseneinrichtung 1 in einen ersten Teilabschnitt 33 auf dem Ablagekörper 3 erfolgt. In dem vorbezeichneten ersten Abschnitt 33 kann bevorzugt eine haftungsverbessernde Oberflächenbeschichtung oder Oberflächenbehandlung vorgesehen werden. Insbesondere kann es vorgesehen werden, in dem ersten Abschnitt 33 ein haftungsverbesserndes Klebeband aufzubringen und somit eine Verbesserung der Anbindung der ersten Teilmenge an den Ablagekörper 3 bzw. auf dessen Ablageoberfläche 300 zu ermöglichen. In dem dargestellten Verfahrensschritt kann es vorgesehen werden, dass die Extrusionsachse 11 der Düseneinrichtung 1 im Schnittpunkt 23 der horizontalen Tangente 20 an den höchsten Punkt des Ablagekörpers 3 und im geringen Abstand zum höchsten Punkt des Ablagekörpers 3, so wie über die Figuren 1A und 1B dargestellt, angeordnet wird.

Die dargestellte Ausführungsform des Ablagekörpers 3 verfügt über den Umfang des Ablagekörpers 3 auf der Ablageoberfläche 300 über zwei Vertiefungen 310, welche parallel zu der Mittelachse 30 des Ablagekörpers 3 ausgebildet sind.

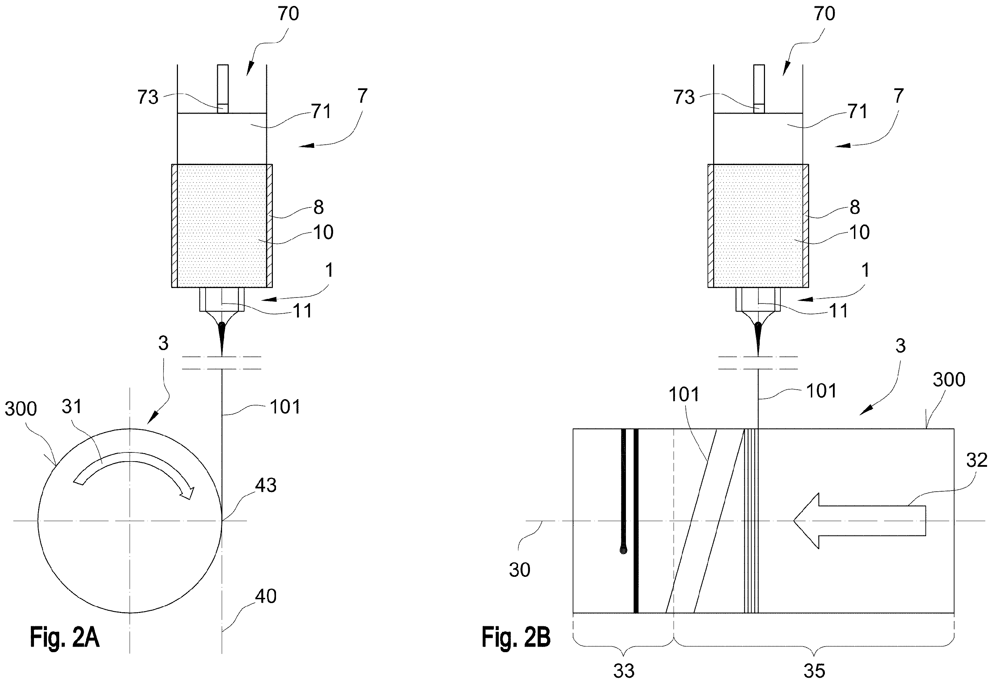

Die Figuren 2A und 2B zeigen Anteile einer zweiten beispielhaften Ausführungsform einer erfindungsgemäßen Schmelzspinnvorrichtung, die sich von der in den Figuren 1A und 1B schematisch dargestellten Vorrichtung insbesondere darin unterscheidet, dass der Ablagekörper 3 keine Vertiefungen über den Umfang gesehen aufweist. In den Figuren 2A und 2B ist die Düseneinrichtung 1 während der Extrusion einer zweiten Teilmenge der aufgeschmolzenen Polymerprobe 10 über die Düseneinrichtung 1 gezeigt unter gleichzeitigem Rotieren des Ablagekörpers 3 um eine Rotationsachse 30 zum Verstrecken und Ablegen des Fadens 101 auf dem Ablagekörper 3.

So wie dies in den Figuren 2A und 2B gezeigt ist, umfasst der Ablagekörper bevorzugt einen ersten Teilbereich 33 sowie einen zweiten Teilbereich 35. Die Ablage des extrudierten Fadens 101 erfolgt bevorzugt im zweiten Ablagebereich 35. Während der Extrusion der zweiten Teilmenge wird der Ablagekörper 3 um die Rotationsachse 30 mit einer hohen Geschwindigkeit der Ablageoberfläche 300 des Ablagekörpers 3 rotiert, welche besonders bevorzugt im Bereich von 100 m/min bis 5000 m/min betragen kann. Die Rotation des Ablagekörpers 3 ist in der Fig. 2A über den gekrümmten Pfeil 31 wiedergegeben. So wie dies in der Fig. 2A erkennbar ist, kann es vorgesehen werden, dass während des Schritts des Extrudierens der zweiten Teilmenge der aufgeschmolzenen Polymerprobe 10 über die Düseneinrichtung 1 und während des Ablegens des mindestens einen Fadens 101 auf dem Ablagekörper 3 der Ablagekörper 3 relativ zu der Düseneinrichtung 1 entlang der Rotationsachse 30 translatorisch verfahren wird, so wie dies mittels dem Pfeil 32 in der Fig. 2B dargestellt ist. Es kann dabei vorgesehen werden, dass die Extrusionsachse 11 der Düseneinrichtung 1, so wie dies in der Fig. 2A dargestellt ist, im Schnittpunkt 43 der vertikalen Tangente 40 an den Ablagekörper 3 und oberhalb in einem definierten Abstand zum Schnittpunkt 43 der vertikalen Tangente 40 an den Ablagekörper 3 angeordnet wird.

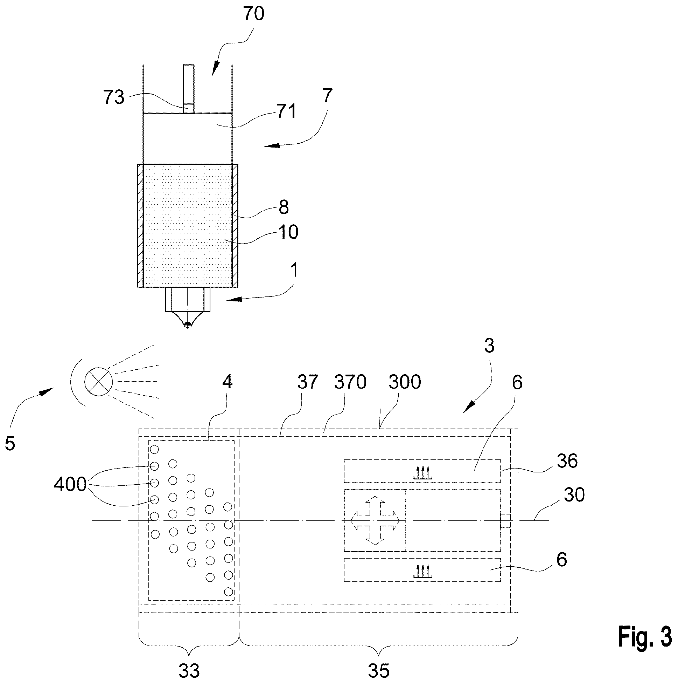

Die Fig. 3 zeigt eine weitere beispielhafte Ausführungsform einer erfindungsgemässen Schmelzspinnvorrichtung für Polymerproben. In der dargestellten Ausführungsform weist der Ablagekörper 3 wiederum eine Antriebseinrichtung 36 zum Rotieren des Ablagekörpers um eine Rotationsachse 30 auf, wobei die Antriebseinrichtung 36 zum Rotieren des Ablagekörpers 3 mit hohen Geschwindigkeiten zur Orientierung der Molekülketten des extrudierten mindestens einen Fadens ausgebildet ist. Der Ablagekörper 3 kann dabei, wie über die Fig. 3 dargestellt, als Hohlwalze 37 ausgebildet werden, wobei die Oberfläche 300 des Walzenmantels 370 als Ablagefläche 300 ausgebildet ist, wobei beispielhaft eine Mehrzahl von Sauglochbohrungen 400 in der Ablagefläche 300 vorgesehen sind, welche mit einer Unterdruckeinrichtung 4 verbunden sind und zur Ansaugung des mindestens einen Fadens ausgebildet sind. So wie dies über die Fig. 3 wiedergegeben ist, werden die Sauglochbohrungen 400 bevorzugt in dem ersten Teilbereich 33 des Ablagekörpers 3 vorgesehen, wobei in dem Bereich der Sauglochbohrungen 400 das Ansaugen des Fadens der extrudierten Polymerprobe erfolgt.

In der dargestellten Ausführungsform umfasst der Ablagekörper 3 eine Heizeinrichtung 6, um den Bereich der Ablageoberfläche 300 des Ablagekörpers 3 auf eine definierte Temperatur zu temperieren. Die Antriebseinrichtung 36 des Ablagekörpers 3 kann weiterhin dazu ausgebildet werden, den Ablagekörper 3 relativ zu der Düseneinrichtung 1 translatorisch zu verfahren und/oder zu verschwenken. Die dargestellte Ausführungsform umfasst weiterhin eine Wärmestrahlungsquelle 5, die im Bereich zwischen der Düseneinrichtung 1 und dem Ablagekörper 3 angeordnet und zur Erwärmung bzw. Aufheizung des mindestens einen Fadens 101 ausgebildet ist.

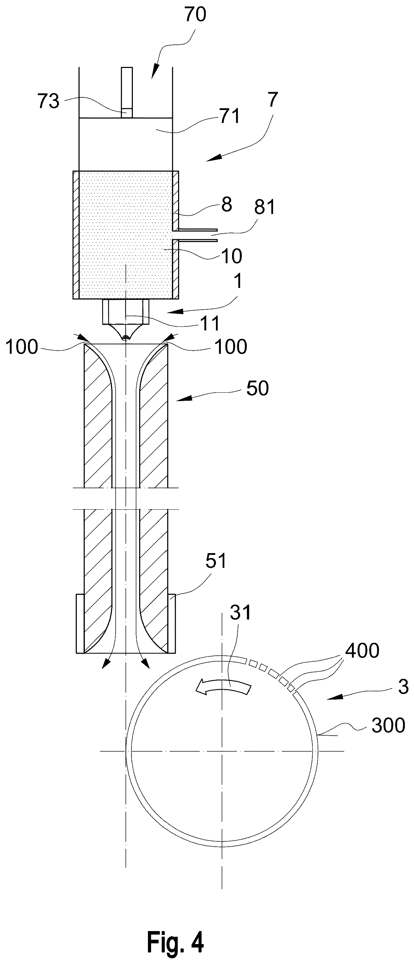

Die Fig. 4 zeigt eine vierte beispielhafte Ausführungsform einer erfindungsgemässen Schmelzspinnvorrichtung für Polymerproben in Frontansicht. Die dargestellte Ausführungsform gemäß Fig. 4 unterscheidet sich von den zuvor dargestellten beispielhaften Ausführungsformen dadurch, dass eine Abzugsvorrichtung 50 zum Abziehen des mindestens einen Fadens zwischen der Düseneinrichtung 1 und dem Ablagekörper 3 angeordnet ist. Die Abzugseinrichtung 50 ist dabei derart ausgestaltet, dass der mindestens eine durch die Düseneinrichtung 1 ausgegebene Faden mittels eines Luftstroms 100 über einen entsprechenden Innenkanal der Abzugsvorrichtung 50 von der Düseneinrichtung 1 abgezogen wird und in Richtung des Ablagekörpers 3 geführt wird. Wie in der Fig. 4 dargestellt, kann es dabei vorgesehen werden, dass die Abzugsvorrichtung 50 wiederum eine Temperierungsvorrichtung 51 umfasst, mittels derer der durch die Abzugsvorrichtung 50 abgezogene und geförderte mindestens eine Faden auf eine definierte Temperatur gebracht werden, insbesondere abgekühlt, werden kann. Der Ablagekörper 3 ist in der dargestellten Ausführungsform mit einem Hohlmantel ausgeführt, wobei der Walzenmantel 370 entsprechend als Ablagefläche 300 ausgebildet ist, wobei die vorbezeichnete Ablagefläche 300 wiederum eine Mehrzahl von Sauglochbohrungen 400 aufweist, um den aus der Düseneinrichtung 1 extrudierten und über die Abzugsvorrichtung 50 geführten mindestens einen Faden auf die Ablageoberfläche 300 des Ablagekörpers 3 mittels Unterdruck über die Saglochbohrungen 400 anzusaugen.

Die in der Fig. 4 dargestellte Ausführungsform weist weiterhin die optionale Vorsehung eines Kanals 81 auf, welcher dazu vorgesehen und ausgestaltet ist, den Aufnahmeraum 70 der Extrudereinrichtung 7 zu evakuieren oder mittels eines Inertgases zu spülen.

## Patentansprüche

1. Verfahren zum Schmelzspinnen von Polymerproben, aufweisend die folgenden Verfahrensschritte:
1a) Aufschmelzen zumindest eines Mengenanteils der Polymerprobe (10),
1b) Extrudieren und Anbinden einer ersten Teilmenge der aufgeschmolzenen Polymerprobe (10) mittels einer Düseneinrichtung (1) auf einen Ablagekörper (3),
1c) Beabstanden des Ablagekörpers (3) von der Düseneinrichtung (1) zur Ausbildung mindestens eines Fadens (101) zwischen der Düseneinrichtung (1) und dem Ablagekörper (3), und
1d) Extrudieren einer zweiten Teilmenge der aufgeschmolzenen Polymerprobe (10) über die Düseneinrichtung (1) unter gleichzeitigem Rotieren des Ablagekörpers (3) um eine Rotationsachse (30) zum Verstrecken und Ablegen des mindestens einen Fadens (101) auf dem Ablagekörper (3).

2. Verfahren zum Schmelzspinnen von Polymerproben, aufweisend die folgenden Verfahrensschritte:
2a) Aufschmelzen zumindest eines Mengenanteils der Polymerprobe (10),
2b) Extrudieren einer ersten Teilmenge der aufgeschmolzenen Polymerprobe (10) mittels einer Düseneinrichtung (1), Abziehen der ersten Teilmenge der aufgeschmolzenen Polymerprobe (10) mittels eines Luftstroms zur Ausbildung mindestens eines Fadens (101) und Ansaugen des mindestens einen Fadens (101) auf einen Ablagekörper (3) mittels einer Saugeinrichtung (4),
2c) bevorzugt Beabstanden des Ablagekörpers (3) von der Düseneinrichtung (1), und
2d) Extrudieren einer zweiten Teilmenge der aufgeschmolzenen Polymerprobe (10) über die Düseneinrichtung (1) unter gleichzeitigem Rotieren des Ablagekörpers (3) um eine Rotationsachse (30) zum Verstrecken und Ablegen des mindestens einen Fadens (101) auf dem Ablagekörper (3).

3. Verfahren nach Anspruch 1 oder 2, wobei im Verfahrensschritt 1b) oder 2b) während des Aufbringens der ersten Teilmenge der aufgeschmolzenen Polymerprobe (10) der Ablagekörper (3) um die Rotationsachse (30) rotiert und/oder entlang der Rotationsachse (30) translatorisch bewegt wird.

4. Verfahren nach einem der Ansprüche 1 bis 3, wobei im Verfahrensschritt 1d) oder 2d) der Ablagekörper (3) um die Rotationsachse (30) mit einer resultierenden Geschwindigkeit der Ablageoberfläche (300) des Ablagekörpers (3) im Bereich von 100 m/Minute bis 5.000 m/Minute rotiert wird.

5. Verfahren nach einem der vorausgehenden Ansprüche 1 bis 4, wobei im Verfahrensschritt 1d) oder 2d) während des Ablegens des mindestens einen Fadens (101) auf dem Ablagekörper (3) der Ablagekörper (3) relativ zu der Düseneinrichtung (1) entlang der Rotationsachse (30) translatorisch verfahren wird, zur Ablage des mindestens einen Fadens (101) auf dem Ablagekörper (3) in einem Ablagemuster.

6. Verfahren nach einem der vorausgehenden Ansprüche, wobei das Verfahren nach dem Verfahrensschritt 1d) oder 2d) zusätzlich den Verfahrensschritt umfasst: e) Annähern der Düseneinrichtung (1) relativ zu dem Ablagekörper und Andrücken einer dritten Teilmenge der Polymerprobe (10) auf dem Ablagekörper (3), bevorzugt in einem dritten Teilbereich des Ablagekörpers (3).

7. Schmelzspinnvorrichtung für Polymerproben, aufweisend:
- eine Heizeinrichtung (8) zum Aufschmelzen zumindest einer Teilmenge der Polymerprobe (10);
- eine Extrudereinrichtung (7) zur Förderung der Polymerprobe (10),
- eine Düseneinrichtung (1) zum Ausgeben des aufgeschmolzenen Polymers (10) in Form mindestens eines Fadens (101), und
- einen Ablagekörper (3) zur Ablage des mindestens einen Fadens (101);
wobei der Ablagekörper (3) eine Antriebseinrichtung (36) zum Rotieren des Ablagekörpers (3) um eine Rotationsachse (30) aufweist, wobei die Antriebseinrichtung (36) zum Rotieren des Ablagekörpers (3) mit hohen Geschwindigkeiten zur Orientierung der Molekülketten des extrudierten mindestens einen Fadens (101) ausgebildet ist.

8. Schmelzspinnvorrichtung nach Anspruch 7, wobei der Ablagekörper (3) als Hohlwalze (37) ausgebildet ist, wobei die Oberfläche (300) des Walzenmantels (370) als Ablagefläche (300) ausgebildet ist, wobei bevorzugt eine Mehrzahl von Sauglochbohrungen (400) in der Ablagefläche (300) vorgesehen sind, welche mit einer Unterdruckeinrichtung (4) verbunden sind zur Ansaugung des mindestens einen Fadens (101).

9. Schmelzspinnvorrichtung nach einem der Ansprüche 7 oder 8, wobei die Antriebseinrichtung (36) des Ablagekörpers (3) weiterhin dazu ausgebildet ist, den Ablagekörper (3) relativ zu der Düseneinrichtung (1) translatorisch zu verfahren und/oder zu verschwenken.

10. Schmelzspinnvorrichtung nach einem der Ansprüche 7 bis 9, wobei die Düseneinrichtung (1) eine Stelleinrichtung umfasst, welche dazu ausgebildet ist, die Düseneinrichtung (1) relativ zu dem Ablagekörper (3) translatorisch zu verfahren und/oder zu verschwenken.

11. Schmelzspinnvorrichtung nach einem der Ansprüche 7 bis 10, wobei die Extrudereinrichtung (7) einen kolbenförmigen Aufnahmeraum (70) für die Polymerprobe (10) und angetriebenen Stempel (71) zum Extrudieren von Mengen der Polymerprobe (10) umfasst.

12. Schmelzspinnvorrichtung nach einem der Ansprüche 7 bis 11, wobei der Aufnahmeraum (70) ausgebildet ist, evakuiert zu werden oder mit einem Inertgas gespült zu werden.

13. Schmelzspinnvorrichtung nach einem der Ansprüche 7 bis 12, wobei die Extrudereinrichtung (7) als kontinuierliche Extrusionseinrichtung ausgebildet ist zur kontinuierlichen Extrusion eines Filamentfadens der Polymerprobe.

14. Schmelzspinnvorrichtung nach einem der Ansprüche 7 bis 13, wobei der zylindrische Ablagekörper (3) über den Umfang der Ablageoberfläche mindestens eine Vertiefung (310) umfasst.

15. Schmelzspinnvorrichtung nach einem der Ansprüche 7 bis 14, weiter aufweisend: eine Sensoreinrichtung (73), die dazu ausgebildet ist, den in der Polymerschmelze der Polymerprobe (10) herrschenden Druck zu detektieren und/oder, falls vorhanden, die auf die Extrudereinrichtung (7) wirkende Kraft zu messen.

16. Verwendung einer Schmelzspinnvorrichtung nach einem der Ansprüche 7 bis 14 zur Durchführung eines Verfahrens gemäß einem der Ansprüche 1 bis 6.
